# EUROPEAN PATENT APPLICATION

(11) **EP 3 012 995 A1**
(43) Date of publication of application: **27.04.2016**
(21) Application number: 15190448.9
(22) Date of filing: 19.10.2015
(51) Int. Cl.: H04L 9/08

(54) **METHOD, SYSTEM AND APPARATUS FOR ONE OR MORE OF ENCRYPTING AND SIGNING A MESSAGE USING VOICE PROFILES**

(30) Priority: 21.10.2014 US 201414519257
(71) Applicant: BlackBerry Limited, Waterloo, ON N2K 0A7 (CA)
(72) Inventor: CIPLI, Gorkem, Kitchener, Ontario N2G 1X5 (CA)
(74) Representative: MERH-IP Matias Erny Reichl Hoffmann Patentanwälte PartG mbB

(57) **Abstract**

A method, system and apparatus for one or more of encrypting and signing a message using voice profiles are provided. At a device comprising: a processor, a memory, and a communication interface, a secure message is generated at the processor from a message and a key by one or more of encrypting the message and signing the message, the key associated with a voice profile, the voice profile comprising a number representative of acoustical characteristics of a user's voice. The secure message is transmitted using the communication interface.

## Description

### FIELD

The specification relates generally to message security and encryption, and specifically to a method, system and apparatus for one or more of encrypting and signing a message using voice profiles.

### BACKGROUND

The evolution of messaging in computers is currently quite active. Security in messaging, however, generally relies on cumbersome public/private key schemes with unique encryption keys, including public/private keys, generated by a third party. In short, a device must request, and even pay, for the unique encryption keys.

### BRIEF DESCRIPTIONS OF THE DRAWINGS

For a better understanding of the various implementations described herein and to show more clearly how they may be carried into effect, reference will now be made, by way of example only, to the accompanying drawings in which:
Fig. 1 depicts a device configured for message security using voice profiles, according to non-limiting implementations.
Fig. 2 depicts a schematic block diagram of a system configured for message security using voice profiles that includes the device of Fig. 1, according to non-limiting implementations.
Fig. 3 depicts a method for message security using voice profiles, according to non-limiting implementations.
Fig. 4 depicts a method for generating a voice profile, according to non-limiting implementations.
Fig. 5 depicts the system of Fig. 2 in which the device is generating the voice profile and/or a key associated therewith, according to non-limiting implementations.
Fig. 6 depicts the system of Fig. 2 in which a remote device is provisioned with the key, according to non-limiting implementations.
Fig. 7 depicts the system of Fig. 2 in which the device is generating a secure message, according to non-limiting implementations.

### DETAILED DESCRIPTION

In general, this disclosure is directed to a device, including, but not limited to a mobile device, which uses keys associated with and/or generated from voice profiles to one or more of encrypt and sign messages. In general, each human being has a unique voice profile that can be generated using statistical methods, and represented as a unique number, and/or statistically unique number and/or computationally unique number. The voice profile (e.g. the unique number) can be used as one or more of an encryption key, a digital signature and/or used as input to an encryption key generation algorithm. In other words, a key associated with the voice profile (where the key can, in some implementations, comprise and/or be the voice profile), is unique can be used to one or more encrypt and sign messages.

In this specification, elements may be described as "configured to" perform one or more functions or "configured for" such functions. In general, an element that is configured to perform or configured for performing a function is enabled to perform the function, or is suitable for performing the function, or is adapted to perform the function, or is operable to perform the function, or is otherwise capable of performing the function.

It is understood that for the purpose of this specification, language of "at least one of X, Y, and Z" and "one or more of X, Y and Z" can be construed as X only, Y only, Z only, or any combination of two or more items X, Y, and Z (e.g., XYZ, XY, YZ, ZZ, and the like). Similar logic can be applied for two or more items in any occurrence of "at least one ..." and "one or more..." language.

An aspect of the present specification provides a device comprising: a processor, a memory, and a communication interface, the processor configured to: generate a secure message from a message and a key by one or more of encrypting the message and signing the message, the key associated with a voice profile, the voice profile comprising a number representative of acoustical characteristics of a user's voice; and, transmit, using the communication interface, the secure message.

The key can comprise the voice profile.

The key can be derived from the voice profile using the voice profile as an input to a key generation algorithm.

One or more of the key and the voice profile can be stored in the memory.

The message can comprise voice data and the voice profile can be generated from the voice data.

The device can further comprise a microphone, the processor can be further configured to generate the voice profile by: receiving, using the microphone, voice data; utilizing Mel-Scale Cepstral feature analysis methods to extract user-dependent features from the voice data; and one or more of: generating the voice data from the user-dependent features using statistical methods; constructing a probability graphical model to generate the voice data from the user-dependent features; and using one or more of HMM (Hidden Markov Models), GMM (Gaussian Mixture Models), B-Spline Mixture models, and Bayesian adaptation, to generate the voice data from the user-dependent features; and updating statistical model parameters each time new voice data is received to refine the voice profile.

The voice profile can comprise a text-independent voice profile.

The processor can be further configured to: receive, using the communication interface, one or more of the key and the voice profile.

The processor can be further configured to transmit, using the communication interface, a copy of the key to a remote device that is to receive the secure message so that the remote device one or more of decrypts and verifies the secure message using the copy of the key.

The processor can be further configured to: receive, using the communication interface, voice data from a remote device; generate a respective key associated with a voice profile of the voice data; receive, using the communication interface, a respective secure message from the remote device; and one or more of decrypt and verify the respective secure message using the respective key.

The message can comprise one or more of an email, a text message, an SMS (short message service) message, an MMS message (multi-media messaging service) message, a document, a chats, and an audio note.

Another aspect of the present specification provides a method comprising: generating, at a processor of a device, a secure message, the device comprising a processor, a memory, and a communication interface, the secure message generated from a message and a key by one or more of encrypting the message and signing the message, the key associated with a voice profile, the voice profile comprising a number representative of acoustical characteristics of a user's voice; and, transmitting, using the communication interface, the secure message.

The key can comprise the voice profile.

The key can be derived from the voice profile using the voice profile as an input to a key generation algorithm.

One or more of the key and the voice profile can be stored in the memory.

The message can comprise voice data and the voice profile can be generated from the voice data.

The device can further comprise a microphone, and the method can further comprise generating the voice profile by: receiving, using the microphone, voice data; utilizing Mel-Scale Cepstral feature analysis methods to extract user-dependent features from the voice data; and one or more of: generating the voice data from the user-dependent features using statistical methods; constructing a probability graphical model to generate the voice data from the user-dependent features; and using one or more of HMM (Hidden Markov Models), GMM (Gaussian Mixture Models), B-Spline Mixture models, and Bayesian adaptation, to generate the voice data from the user-dependent features; and updating statistical model parameters each time new voice data is received to refine the voice profile.

The method can further comprise receiving, using the communication interface, one or more of the key and the voice profile.

The method can further comprise transmitting, using the communication interface, a copy of the key to a remote device that is to receive the secure message so that the remote device one or more of decrypts and verifies the secure message using the copy of the key.

The method can further comprise: receiving, using the communication interface, voice data from a remote device; generating a respective key associated with a voice profile of the voice data; receiving, using the communication interface, a respective secure message from the remote device; and one or more of decrypting and verifying the respective secure message using the respective key.

Yet a further aspect of the specification provides a computer program product, comprising a computer usable medium having a computer readable program code adapted to be executed to implement a method comprising: generating, at a processor of a device, a secure message, the device comprising a processor, a memory, and a communication interface, the secure message generated from a message and a key by one or more of encrypting the message and signing the message, the key associated with a voice profile, the voice profile comprising a number representative of acoustical characteristics of a user's voice; and, transmitting, using the communication interface, the secure message. The computer usable medium can comprise a non-transitory computer usable medium.

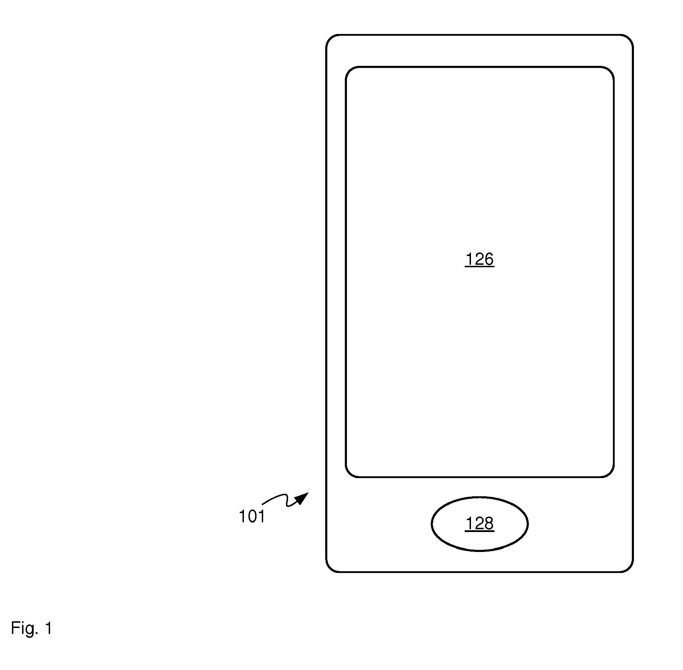

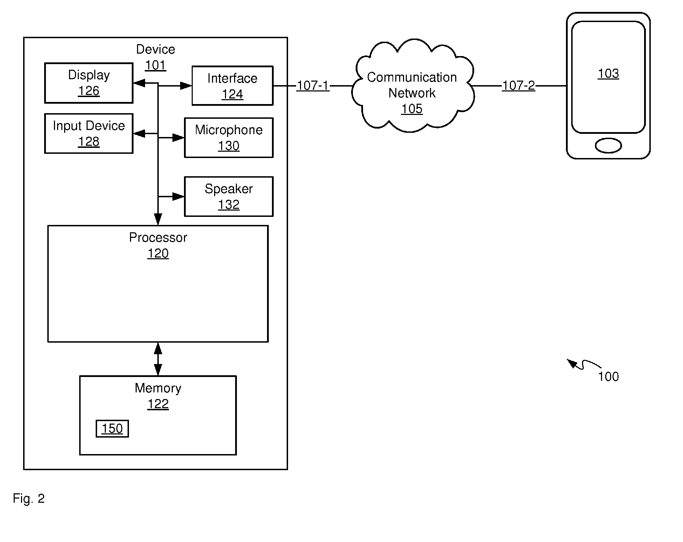

Fig. 1 depicts a front perspective view of a mobile electronic device 101 (referred to interchangeably hereafter as device 101) configured for message security using voice profiles, according to non-limiting implementations; Fig. 2 depicts a system 100 which includes device 101, as well as a schematic block diagram of device 101, according to non-limiting implementations. System 100 comprises device 101, a remote computing device 103, and a communication network 105 (referred to interchangeably hereafter as network 105), devices 101, 103 in communication using network 105 and respective links 107-1, 107-2 thereto, according to non-limiting implementations. Links 107-1, 107-2 will be interchangeably referred to hereafter, collectively, as links 107, and generically as a link 107. Device 101 comprises a processor 120 interconnected with a memory 122, a communications interface 124 (interchangeably referred to hereafter as interface 124), a display 126 an input device 128, a microphone 130 and speaker 132. While not depicted, device 103 can generally comprise a structure and/or components similar to that of device 101.

As will be explained in detail below, device 101 is generally configured to: optionally generate a message; generate a secure message from the message and a key by one or more of encrypting the message and signing the message, the key associated with a voice profile, the voice profile comprising a number representative of acoustical characteristics of a user's voice; and, transmit, using communication interface 124, the secure message.

Network 105 can comprise any suitable combination of: wired networks, wireless networks, cell-phone networks, cellular network networks (including but not limited to 2G, 2,5G, 3G, 4G+, and the like), Bluetooth networks, NFC (near field communication) networks, WiFi networks, WiMax networks, packet based networks, the Internet, analog networks, the PSTN (public switched telephone network), WiFi access points, and the like, and/or a combination.

Links 107 comprises any suitable links for enabling device 101 and device 103 to communicate using network 105. Links 107 can hence each include any suitable combination of wired and/or wireless links, wired and/or wireless devices and/or wired and/or wireless networks, including but not limited to any suitable combination of USB (universal serial bus) cables, serial cables, wireless links, cell-phone links, cellular network links (including but not limited to 2G, 2,5G, 3G, 4G+, and the like) wireless data, Bluetooth links, NFC (near field communication) links, WiFi links, WiMax links, packet based links, the Internet, analog networks, the PSTN (public switched telephone network), WiFi access points, and the like, and/or a combination.

Device 101 can be any type of electronic device that can be used in a self-contained manner. Device 101 includes, but is not limited to, any suitable combination of electronic devices, communications devices, computing devices, personal computers, laptop computers, portable electronic devices, mobile computing devices, portable computing devices, tablet computing devices, laptop computing devices, desktop phones, telephones, PDAs (personal digital assistants), cellphones, smartphones, e-readers, internet-enabled appliances and the like. Other suitable devices are within the scope of present implementations.

Fig. 1 further depicts a schematic diagram of device 101 according to non-limiting implementations. It should be emphasized that the structure of device 101 in Fig. 1 is purely an example, and contemplates a device that can be used for both wireless voice (e.g. telephony) and wireless data communications (e.g. email, web browsing, text, and the like). However, while Fig. 1 contemplates a device that can be used for telephony and/or messaging, in other implementations, device 101 can comprise a device configured for implementing any suitable specialized functions, including but not limited to one or more of telephony, messaging, computing, appliance, and/or entertainment related functions.

Device 101 comprises at least one input device 128 generally configured to receive input data, and can comprise any suitable combination of input devices, including but not limited to a keyboard, a keypad, a pointing device, a mouse, a track wheel, a trackball, a touchpad, a touch screen and the like. Other suitable input devices are within the scope of present implementations. In specific non-limiting implementations described herein, input device 128 comprises a touch screen for receiving touch input data.

Input from input device 128 is received at processor 120 (which can be implemented as a plurality of processors, including but not limited to one or more central processors (CPUs) and/or one or more processing units; either way, processor 120 comprises a hardware element and/or a hardware processor of device 101). Processor 120 is configured to communicate with memory 122 comprising a non-volatile storage unit (e.g. Erasable Electronic Programmable Read Only Memory ("EEPROM"), Flash Memory) and a volatile storage unit (e.g. random access memory ("RAM")). Programming instructions that implement the functional teachings of device 101 as described herein are typically maintained, persistently, in memory 122 and used by processor 120 which makes appropriate utilization of volatile storage during the execution of such programming instructions. Those skilled in the art recognize that memory 122 is an example of computer readable media that can store programming instructions executable on processor 120. Furthermore, memory 122 is also an example of a memory unit and/or memory module and/or a non-volatile memory.

In particular, memory 122 stores an application 150 that, when processed by processor 120, enables processor 120 to: optionally generate a message; generate a secure message from the message and a key by one or more of encrypting the message and signing the message, the key associated with a voice profile, the voice profile comprising a number representative of acoustical characteristics of a user's voice; and, transmit, using communication interface 124, the secure message. Furthermore, application 150 is an example of programming instructions stored at memory 122.

Processor 120 can also be configured to communicate with a display 126, and optionally a microphone 130 and a speaker 132. Display 126 comprises any suitable one of or combination of CRT (cathode ray tube) and/or flat panel displays (e.g. LCD (liquid crystal display), plasma, OLED (organic light emitting diode), capacitive or resistive touch screens, and the like). When display 126 comprises a touch screen, display 126 and input device 128 can be combined into one apparatus. Microphone 130 comprises any suitable microphone for receiving sound data. Speaker 132 comprises any suitable speaker for providing sound data, audible alerts, audible communications from remote devices, and the like, at device 101.

In some implementations, input device 128 and display 126 are external to device 101, with processor 120 in communication with each of input device 128 and display 126 via a suitable connection and/or link.

Processor 120 also connects to interface 124, which can be implemented as one or more radios and/or connectors and/or network adaptors, configured to communicate with network 105 via link 107-1. In general, interface 124 is configured to correspond with the network architecture that is used to implement link 107-1, as described above. In other implementations a plurality of links with different protocols can be employed and thus interface 124 can comprise a plurality of interfaces to support each link. Regardless, interface 124 is configured to establish a roaming data connection with network 105 using one or more links 107. Indeed, any suitable combination of interfaces is within the scope of present implementations.

While not depicted, device 101 further comprises a power source, for example a connection to a battery, a power pack and the like and/or a connection to a main power supply and a power adaptor (e.g. and AC-to-DC (alternating current to direct current) adaptor, and the like), which can be used to power device 101 and/or charge a battery and the like.

Further, it should be understood that in general a wide variety of configurations for device 101 are contemplated.

Device 103 generally comprises a device that can be similar to, or different from, device 101, but either way generally comprises at least a processor, memory and communication interface respectively similar to processor 120, memory 122 and interface 124.

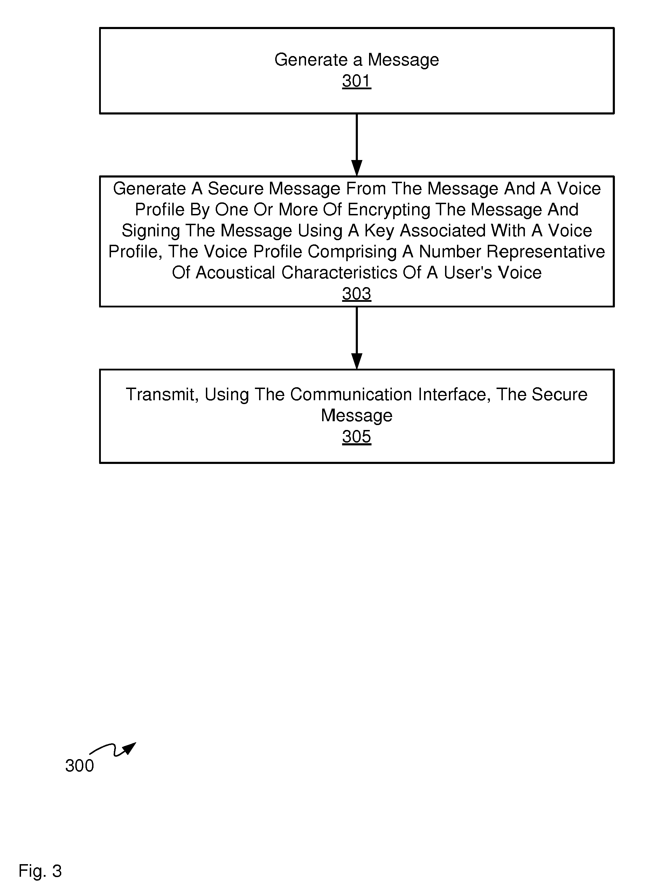

Attention is now directed to Fig. 3 which depicts a flowchart of a method 300 for message security using voice profiles, according to non-limiting implementations. In order to assist in the explanation of method 300, it will be assumed that method 300 is performed using system 100, and specifically by processor 120 of device 101, for example when processor 120 processes application 150. Indeed, method 300 is one way in which device 101 can be configured. Furthermore, the following discussion of method 300 will lead to a further understanding of device 101, and system 100 and its various components. However, it is to be understood that system 100 and/or method 300 can be varied, and need not work exactly as discussed herein in conjunction with each other, and that such variations are within the scope of present implementations.

Regardless, it is to be emphasized, that method 300 need not be performed in the exact sequence as shown, unless otherwise indicated; and likewise various blocks may be performed in parallel rather than in sequence; hence the elements of method 300 are referred to herein as "blocks" rather than "steps". It is also to be understood, however, that method 300 can be implemented on variations of system 100 as well.

At block 301, processor 120 optionally generates a message. Alternatively, the message can be received via interface 124. At block 303, processor 120 generates a secure message from the message and a key by one or more of encrypting the message and signing the message, the key associated with a voice profile, the voice profile comprising a number representative of acoustical characteristics of a user's voice. At block 305, processor 120 transmits, using communication interface 124, the secure message.

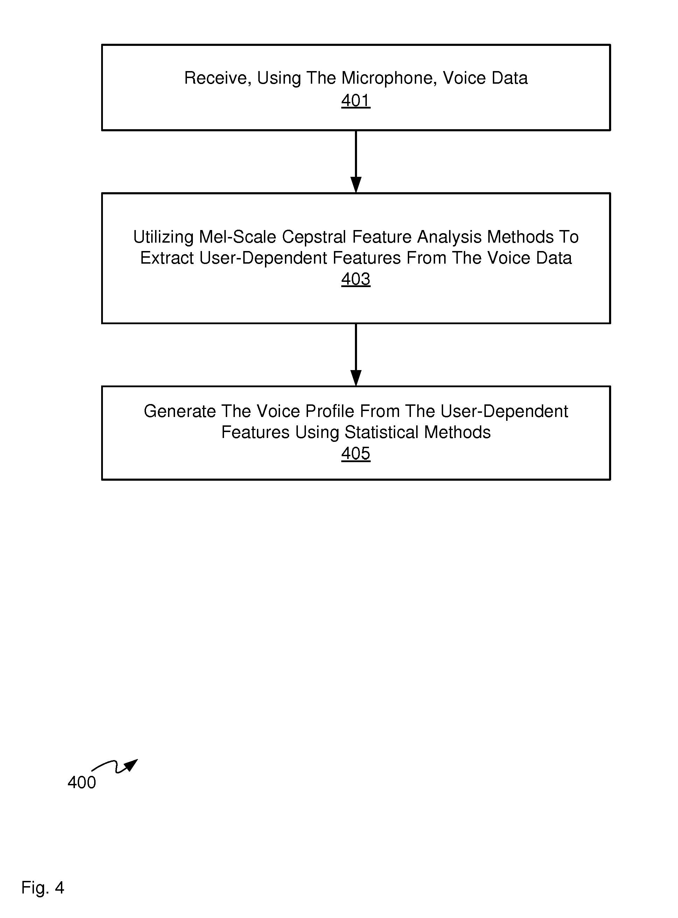

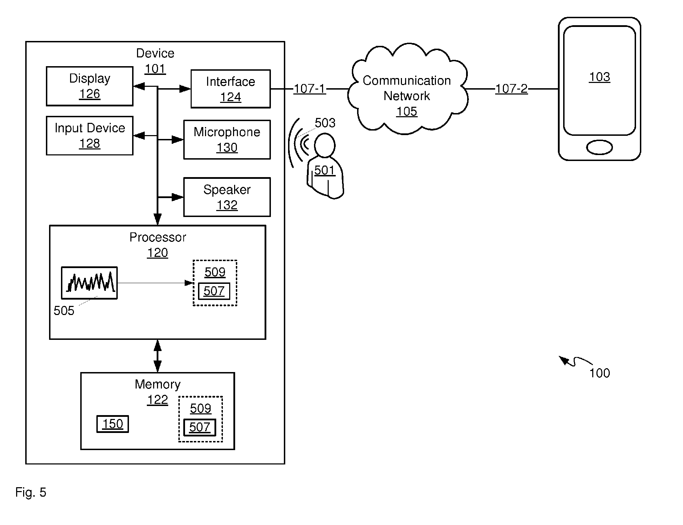

Method 300 will now be discussed with reference to Figs. 4 to 7, with each of Figs. 5, 6 and 7 being substantially similar to Fig. 2, with like elements having like numbers.

In particular, attention is first directed to Fig. 4, which depicts a flowchart of a method 400 for generating a voice profile, according to non-limiting implementations. In order to assist in the explanation of method 400, it will be assumed that method 400 is performed using system 100, and specifically by processor 120 of device 101, for example when processor 120 processes application 150. In other words, a first module of application 150 can comprise method 300, while a second module of application 150 can comprise method 400; however, in other implementations, method 300 and method 400 can be stored at device 101 as separate applications, and processed separately by processor 120. Regardless, method 400 is one way in which device 101 can be configured. Furthermore, the following discussion of method 400 will lead to a further understanding of device 101, and system 100 and its various components. However, it is to be understood that system 100 and/or method 400 can be varied, and need not work exactly as discussed herein in conjunction with each other, and that such variations are within the scope of present implementations.

Regardless, it is to be emphasized, that method 400 need not be performed in the exact sequence as shown, unless otherwise indicated; and likewise various blocks may be performed in parallel rather than in sequence; hence the elements of method 400 are referred to herein as "blocks" rather than "steps". It is also to be understood, however, that method 400 can be implemented on variations of system 100 as well.

At block 401, processor 120 receives, using microphone 130, voice data. At block 403, processor 120 utilizes Mel-Scale Cepstral feature analysis methods to extract user-dependent features from the voice data. At block 405, processor 120 generates the voice data from the user-dependent features using statistical methods.

For example, attention is next directed to Fig. 5, which depicts a user 501 speaking into microphone 130 of device 101. Microphone 130 receives sound waves 503, and converts sound waves 503 to voice data 505, which is received at processor 120 (i.e. block 401), for example as a data file representative of a digital representation of sound waves 503. Processor 120 can then process voice data 505 to produce voice profile 507 using the above mentioned Mel-Scale Cepstral feature analysis methods to extract user-dependent features from the voice data and statistical methods (i.e. blocks 403, 405). Such statistical methods can include, but are not limited to: constructing a probability graphical model to generate the voice data from the user-dependent features; using one or more of HMM (Hidden Markov Models), GMM (Gaussian Mixture Models), B-Spline Mixture models and Bayesian adaptation, to generate the voice data from the user-dependent features; and updating statistical model parameters each time new voice data is received to refine voice profile 507. HMM models can include, but are not limited to, HMM model with multiple Gaussian profiles. When B-Spline Mixture models are used, B-Spline mixtures can be used for each for each state present in user-dependent features extracted from voice data 505. In any event, voice profile 507 can then be stored in memory 122, as also depicted in Fig. 5.

Furthermore, while present implementations make reference to Mel-Scale Cepstral feature analysis methods to extract user-dependent features from voice data 505, other methods can be used to extract user-dependent features from voice data 505. For example, a technique which can be referred to as "a noise reduction using text independent speaker identification model" can also be used in which a device (e.g. processor 120 of device 101) not only determines a signature of a voice of a user (e.g. voice profile), but is also configured to learn background noise and/or sounds and/or noise around the user; hence, not can such a device improve model of a voice signature (e.g. voice profile) of a user, one or more sound and/or noise models are used to to generate secure messages and/or keys associated with voice profiles, even in noisy environments. However, there are yet further voice profile generation algorithms which are within the scope of present implementations that will occur to those skilled in the art.

However, when Mel-Scale Cepstral feature analysis methods are used to extract user-dependent features from voice data 505, it is appreciated that voice profile 507 comprises a text-independent voice profile. In other words, in such methods, user 501 is not required to recite specific words and/or phrases in order to generate voice profile 507. Rather, Mel-Scale Cepstral feature analysis methods capture particular intonations and other voice features of user 501 that are independent of text.

As such, voice profile 507 can be generated in the background, for example while devices 101, 103 are in telephonic communication and user 501 is communicating with a user of remote device 103 using device 101 (and/or when device 101 is in communication with another remote device). Alternatively, a graphic user interface (GUI) associated with application 150 can be provided at display 126 which instructs user 501 to speak into microphone 130 for a given period of time in order to generate voice profile 507, for example in a training mode. Such instruction of user 501 can include, or exclude, instructions to speak specific words to better generate voice profile 507. However, when Mel-Scale Cepstral feature analysis methods are used to extract user-dependent features from voice data 505, such instructions can exclude such specific words as Mel-Scale Cepstral feature analysis methods are text independent.

In other words, voice profile 507 represents the unique user-dependent features of a voice of user 501, as represented by a unique number. In other words, each human being has a voice that is generally different from every other human. In the rare case where collisions occur, voice profile 507 can also be referred to as statistically unique and/or computationally unique: for example, collisions are so rare that voice profile 507 is appreciated to be at least statistically unique and/or computationally unique similar to collisions on hash functions. In specific non-limiting implementations, after acoustical and/or voice features of a particular user are extracted from voice data 505 (whether Mel-Scale Cepstral feature analysis methods or not), a statistical model can be trained to generate multiple unique parameters from the extracted features. These parameters uniquely identify a user's voice and can be used to generate a unique transition matrix. An algorithm, including, but not limited to, the Viterbi algoritm, can then be used to find a state sequence which could have emitted the user voice, for example according to maximum likelihood (ML) criterion. The transition matrix can be used to generate and/or transform an existing key into a key based on voice profile 507 and/or the transition matrix can be reduced to a one-dimensional number (e.g. a numerical vector) that can be used as a key and/or used to generate a key, as described in further detail below. In other words, Mel-Scale Cepstral feature analysis methods (or any other feature extraction algorithm) can be used for two purposes: identify and/or verify a user's voice; and afterwards, determine a "best" "unique" transition matrix using an algorithm (including, but not limited to, the Viterbi algorithm). The transition matrix is then used to generate and/or encrypt a key.

Hence, voice profile 507 (i.e. comprising a number and/or a unique number) can be used as one or more of an encryption key, a digital signature key, and input to a key generation algorithm in order to one or more of sign and encrypt messages. In other words, a key associated with voice profile 507 can be used to one or more encrypt and sign messages generated by device 101.

As also depicted in Fig. 9, in some implementations, processor 120 can generate and/or derive and/or produce a key 509 from voice profile 507. As depicted, key 509 comprises voice profile 507.

However, in other implementations, key 509 can be derived from voice profile 507 using voice profile 507 as an input to a key generation algorithm, which can be module of application 150 and/or a separate application. For example, voice profile 507 can be used as input to a public/private key generation algorithm to produce a public key, which can be shared, for example, with device 103, and a private key, which can comprise voice profile 507, or be different from voice profile 507. Alternatively, voice profile 507 can be used as input to a symmetric generation algorithm to produce a symmetric key, which can be shared, for example, with device 103. Alternatively, an existing key (e.g. as output from a key generation algorithm) can be transformed by the transition matrix referred to above. As voice profile 507 comprises a unique number, the output of the key generation algorithm will also comprise a unique number.

In some implementations, key 509 can be derived from voice profile 507 using hash algorithms, and/or voice profile 507 can be processed into key 509 using any suitable algorithm, including, but not limited to, appending further data to voice profile 507 (e.g. a hash of voice profile 507). However, any suitable method of generating and/or deriving and/or producing key 509 from voice profile 507 is within the scope of present implementations. For example, key 509 can comprise one or more of an AES (Advanced Encryption System) key and an RSA (Rivest/Shamir/Adleman) key used, respectively, in AES and RSA encryption algorithms.

In Fig. 5, key 509 is depicted in stippled lines indicating that a specific block and/or step in method 400 for generation of a key that is different from voice profile 507 is optional and indeed, voice profile 507 can be used as key 509. Hence, key 509 can be referred to as being associated with voice profile 507 which can include, but is not limited to, key 509 comprising voice profile 507, and key 509 being derived from voice profile 507, as described above and, alternatively, as described below, key 509 being associated with voice profile 507 in a database, and the like. However, it is to be appreciated that references to key 509, and/or key 509 "associated" with voice profile 507, hereafter can refer to one or more of: key 509 being derived from voice profile 507, key 509 comprising voice profile 507, key 509 being voice profile 507, and key 509 being associated with voice profile 507, and the like, in a database.

In any event, one or more of key 509 and voice profile 507 is stored in the memory 122, as also depicted in Fig. 5, for use by processor 120 in generating a secure message according to method 300.

Alternatively, method 400 can be implemented by another computing device, for example another device that be used by user 501 to implement method 400, and the resulting key 509 and/or voice profile 507 transmitted to device 101 using network 105. Hence, in these implementations, processor 120 can be configured to receive, using communication interface 124, one or more of key 509 and voice profile 507; and store one or more of key 509 and voice profile 507 in memory 122. In some of these implementations, voice profile 507 can be received using interface 124 and key 509 generated there from by processor 120.

It is further appreciated that Fig. 5 is further representative of an acquisition mode of device 101 in which: user 501 is identified using and verified (e.g. respectively using Mel-Scale Cepstral feature analysis methods and the statistical methods to build the model); and voice profile 507 is generated (e.g. a transition matrix can be generated from voice input (e.g. sound waves 503) using the Viterbi algorithm).

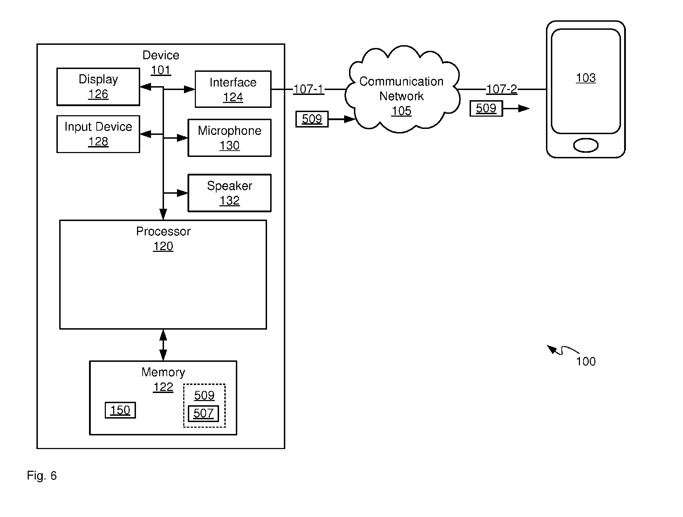

Attention is next directed to Fig. 6 which depicts key 509 being provisioned at device 103, according to non-limiting implementations. Specifically, in these implementations, processor 120 can be configured to transmit, using communication interface 124 (as well as links 107 and network 105), a copy of key 509 to remote device 103, so that remote device 103 can one or more of decrypt and verify a secure message (i.e. that is encrypted and/or signed by key 509) using the copy of key 509. In other words, as described in further detail below, remote device 103 is to receive a secure message from device 101 and in order to one or more of decrypt and verify the secure message using key 509, remote device 103 receives the copy of key 509 and stores the copy of key 509 in a memory accessible to remote device 103.

Alternatively, when key 509 comprises a private key, a corresponding public key can be transmitted to device 103, rather than key 509. In some of these implementations, public key can be uploaded to a key management server, and device 103 can download the public key from the key management server.

Alternatively, a processor of remote device 103 can be configured to implement method 400 when device 101 is transmitting voice data to remote device 103, for example during a voice call, so that device 103 can generate key 509. Indeed, processor 120 can also be configured to: receive, using communication interface 124, voice data from a remote device 103; generate a respective key associated with a voice profile of the voice data received from remote device 103; receive, using communication interface 124, a respective secure message from remote device 103; and one or more of decrypt and verify the secure message using the respective key. In other words, on a telephonic call, by virtue of implementing method 400 at each of device 101, 103, device 101 can generate a respective key associated with device 103, and device 103 can generate key 509 associated with device 101. In this manner, devices 101, 103 can "exchange" keys by respective users associated with each device 101, 103 communicating on a voice call using devices 101, 103.

However, in some instances, device 101 can prevent remote device 103 from generating key 509 by altering a voice of user in a telephonic call so that key 509 cannot be generated. Such alteration can include one or more of: altering acoustical characteristics of the user's voice; inserting tones and/or frequencies in the voice call; and/or changing tones and/or frequencies in the voice call. Hence, when device 103 attempts to generate key 509, device 103 is prevented from doing so as any voice profile of a user of device 101 generated using such altered voice data cannot comprise a number representative of acoustical characteristics of a voice of user 501, as the acoustical characteristics of the user's voice have been altered.

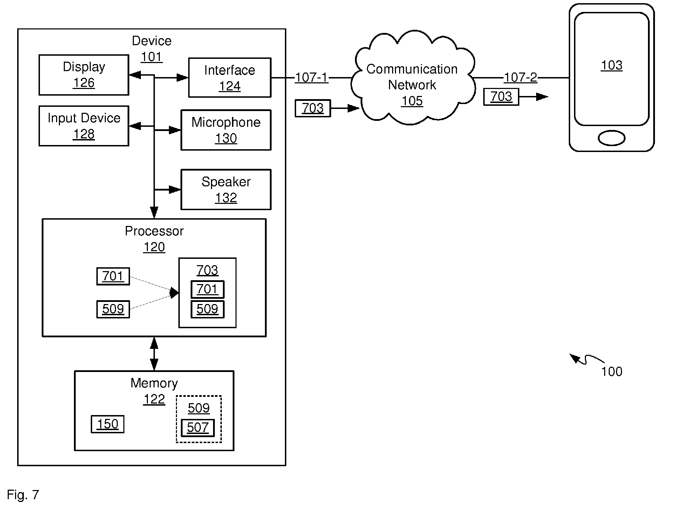

In any event, attention is next directed to Fig. 7, which depicts processor 120 generating a message 701 (i.e. at block 301). Message 701 can comprises one or more of an email, a text message, an SMS (short message service) message, an MMS message (multi-media messaging service) message, a document, a chats, an audio note, and the like, however other types of messages are within the scope of present implementations.

Furthermore, when message 701 comprises voice data, for example an audio note, in alternative implementations, voice profile 507 and/or key 509 can be generated from the voice data. In other words, in these alternative implementations, user 501 can record a voice note, an audio note and the like at device 101, and processor 120 can generate voice profile 507 and/or key 509 there from.

In some implementations, message 701 can be generated by receiving input data from input device 128, and/or by receiving message 701 using interface 124, and the like. Indeed, any suitable method for generating a message 701 is within the scope of present implementations. For example, message generation can be optional. For example, message 701 can have been received using interface 124 and processor 120 can forward message 701 within method 300.

Processor 120 generates a secure message 703 from message 701 and key 509 (i.e. block 303) by one or more of encrypting message 701 and signing message using key 509. For example, key can be used as a digital signature, so that secure message 703 comprises message 701 and key 509 as a digital signature. Alternatively, secure message 703 can be generated by encrypting message 701 with key 509 using any suitable encryption method, including, but not limited to AES and RSA encryption.

In any event, processor 120 transmits secure message 703 to remote device 103 (i.e. block 305) using interface 124, links 107 and network 105. Remote device 103 receives secure message 703, and can decrypt secure message 703 using the copy of key 509 (and/or an associated public key) provisioned at device 103 as described above with respect to Fig. 6, and/or verify secure message 703 by comparing key 509 received with secure message 703 to the copy of key 509 accessible to device 103, also described above with respect to Fig. 6.

Persons skilled in the art will appreciate that there are yet more alternative implementations and modifications possible. For example, in some implementations, voice profile 507 and/or key 509 can be used for password entry into an encryption system. Hence, generation of a secure message that is signed and/or encrypted using a key does not occur until voice profile 507 is compared with a voice of a user to verify the user. In these implementations, a key used to encrypt and/or signed can be derived from and/or can comprise voice profile 507, however the key can also be associated with voice profile 507 in a database, and the like, so that access to the key is only granted once a voice of a user is verified using voice profile 507. As such, voice profile 507 can be used as a password for accessing the key. Voice profile 507 can be updated and/or refined each time voice data 505 is acquired.

Hence, described herein are a method, system and apparatus for message security using voice profiles where a key associated with a voice profile is used to one or more of encrypt and sign a message, the voice profile comprising a number representative of acoustical characteristics of a user's voice. Hence, rather than obtain a key from a third party entity, the key can be generated from the voice profile and/or the key can comprise the voice profile, the key and/or the voice profile being unique to a user, as each user has a unique voice profile.

Those skilled in the art will appreciate that in some implementations, the functionality of devices 101, 103 can be implemented using pre-programmed hardware or firmware elements (e.g., application specific integrated circuits (ASICs), electrically erasable programmable read-only memories (EEPROMs), etc.), or other related components. In other implementations, the functionality of devices 101, 103 can be achieved using a computing apparatus that has access to a code memory (not shown) which stores computer-readable program code for operation of the computing apparatus. The computer-readable program code could be stored on a computer readable storage medium which is fixed, tangible and readable directly by these components, (e.g., removable diskette, CD-ROM, ROM, fixed disk, USB drive). Furthermore, the computer-readable program can be stored as a computer program product comprising a computer usable medium. Further, a persistent storage device can comprise the computer readable program code. The computer-readable program code and/or computer usable medium can comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium can be either a non-mobile medium (e.g., optical and/or digital and/or analog communications lines) or a mobile medium (e.g., microwave, infrared, free-space optical or other transmission schemes) or a combination thereof.

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyrights whatsoever.

Persons skilled in the art will appreciate that there are yet more alternative implementations and modifications possible, and that the above examples are only illustrations of one or more implementations. The scope, therefore, is only to be limited by the claims appended hereto.

## Claims

1. A device comprising:
a processor, a memory, and a communication interface, the processor configured to:
generate a secure message from a message and a key by one or more of encrypting the message and signing the message, the key associated with a voice profile, the voice profile comprising a number representative of acoustical characteristics of a user's voice; and,
transmit, using the communication interface, the secure message.

2. The device of claim 1, wherein the key comprises the voice profile.

3. The device of claim 1 or 2, wherein one or more of the key and the voice profile is stored in the memory.

4. The device of any one of claims 1 to 3, further comprising a microphone, the processor further configured to generate the voice profile by: receiving, using the microphone, voice data; utilizing Mel-Scale Cepstral feature analysis methods to extract user-dependent features from the voice data; and one or more of: generating the voice data from the user-dependent features using statistical methods; constructing a probability graphical model to generate the voice data from the user-dependent features; and using one or more of HMM 'Hidden Markov Models', GMM 'Gaussian Mixture Models', B-Spline Mixture models, and Bayesian adaptation, to generate the voice data from the user-dependent features; and updating statistical model parameters each time new voice data is received to refine the voice profile.

5. The device of any one of claims 1 to 4, wherein the voice profile comprises a text-independent voice profile.

6. The device of any one of claims 1 to 5, wherein the message comprises one or more of an email, a text message, an SMS 'short message service' message, an MMS message 'multi-media messaging service' message, a document, a chats, and an audio note.

7. A method comprising:
generating, at a processor of a device, a secure message, the device comprising a processor, a memory, and a communication interface, the secure message generated from a message and a key by one or more of encrypting the message and signing the message, the key associated with a voice profile, the voice profile comprising a number representative of acoustical characteristics of a user's voice; and,
transmitting, using the communication interface, the secure message.

8. The method of claim 7, wherein the key comprises the voice profile.

9. The method of claim 7 or 8, wherein the key is derived from the voice profile using the voice profile as an input to a key generation algorithm.

10. The method of any one of claims 7 to 9, wherein the message comprises voice data and the voice profile is generated from the voice data.

11. The method of any one of claims 7 to 10, wherein the device further comprises a microphone, the method further comprises generating the voice profile by: receiving, using the microphone, voice data; utilizing Mel-Scale Cepstral feature analysis methods to extract user-dependent features from the voice data; and one or more of: generating the voice data from the user-dependent features using statistical methods; constructing a probability graphical model to generate the voice data from the user-dependent features; and using one or more of HMM 'Hidden Markov Models', GMM 'Gaussian Mixture Models', B-Spline Mixture models, and Bayesian adaptation, to generate the voice data from the user-dependent features; and updating statistical model parameters each time new voice data is received to refine the voice profile.

12. The method of any one of claims 7 to 11, further comprising receiving, using the communication interface, one or more of the key and the voice profile.

13. The method of any one of claims 7 to 12, further comprising transmitting, using the communication interface, a copy of the key to a remote device that is to receive the secure message so that the remote device one or more of decrypts and verifies the secure message using the copy of the key.

14. The method of any one of claims 7 to 13, further comprising: receiving, using the communication interface, voice data from a remote device; generating a respective key associated with a voice profile of the voice data; receiving, using the communication interface, a respective secure message from the remote device; and one or more of decrypting and verifying the respective secure message using the respective key.

15. A computer program product, comprising a non-transitory computer usable medium having a computer readable program code adapted to be executed to implement the method of any one of claims 7 to 14.
